# EUROPEAN PATENT SPECIFICATION

(11) **EP 2 346 250 B1**
(45) Date of publication and mention of the grant of the patent: **04.03.2015**
(21) Application number: 08877238.9
(22) Date of filing: 30.12.2008
(51) Int. Cl.: H04L 29/06, H04N 21/2225, H04N 21/472, H04N 21/63, H04N 21/845, H04L 29/08

(54) **Method and system for downloading internet TV media content using a peer-to-peer exchange area at the server side and a peer-to-peer exchange area at the terminal side**
Verfahren und System zum Download von Internet-TV-Media-Inhalten mit Hilfe eines Peer-to-Peer-Austauschbereichs auf der Server-Seite und eines Peer-to-Peer-Austauschbereichs an der Anschlussseite
Procédé et système pour télécharger du contenu multimédia télévisuel par Internet à l'aide d'une zone d'échange pair à pair du côté serveur et une zone d'échange pair à pair du côté terminal

(30) Priority: 07.10.2008 CN 200810167156
(43) Date of publication of application: 20.07.2011
(73) Proprietor: ZTE Corporation, Shenzhen, Guangdong 518057 (CN)
(72) Inventor: LI, Mujin, Guangdong 518057 (CN); LIU, Xiangyu, Guangdong 518057 (CN)
(74) Representative: Sharples, Andrew John
(86) International application number: PCT/CN2008/073873
(87) International publication number: WO 2010/040269

(56) References cited:
- WO-A1-2008/024037
- WO-A1-2008/051681
- CN-A- 1 558 676
- CN-A- 1 798 328
- CN-A- 1 909 650
- US-A1- 2007 250 880
- US-A1- 2008 155 061
- US-A1- 2008 205 291

## Description

### Field of the Invention

The present invention relates to communication field, in particular to a system and method for implementing media interaction of IPTV (Internet Protocol TV).

### Background of the Invention

For an operator, it is a challenge to provide TV On Demand (TVOD) and Time Shift TV (TSTV) services in an Internet Protocol TV (IPTV) system, especially, in a metropolitan area network (even a wide area network). With the popularization of standard definition TV and even high definition TV, the TSTV and TVOD programs of IPTV will utilize a mass of storage space. Therefore, one bottleneck must be faced is network bandwidth insufficiency if a great volume of TVOD and TSTV service of IPTV is provided in the metropolitan area network or the wide area network.

Currently, the P2P technology is used for providing services such as file download, network TV and TVOD, etc. in Internet network. Since the Internet network is a network which provides services of one performing the best, the service quality can not be guaranteed. Moreover, because various peers randomly join or leave, a user can not obtain a video quality which can meet requirements although there are various P2P algorithms for optimization in various ways.

In the prior art, the operators utilize the CDN (Content Delivery Network) to solve the transmission problem of IPTV video stream in spanning metropolitan area network or spanning wide area network, so as to provide a great volume and high quality TVOD services and TSTV services in the IPTV. When the CDN is employed to realize services, it is required to release and store the IPTV video program to a plurality of CDN nodes in advance. When a user terminal requests a service, the most appropriate node among the plurality of CDN nodes capable of providing services to the user is selected to provide the service to the user. Because the solution employs a mode based on the Client/Server (C/S), the service capability is limited by that of the server and the network bandwidth, which will directly result in a very high cost in construction and poor system extensibility. When there are a great number of online users, the users can not obtain high quality IPTV video services, which degrade the user's experience.

US2008155061 discloses a system in which customer content is uploaded to the CDN and stored in the edge network, or in a storage network associated therewith. The CDN edge network is then used to prime the P2P network, which may be used to take over some of the content delivery requirements for the customer content.

WO2008051681 discloses a method in which a playback buffer is monitored to determine an amount of streaming media content at respective time units. The media source is then selected based on the amount of the streaming media content in the playback buffer.

At present, there are no effective solutions to solve the problems of poor service quality, high system construction cost, and poor system extensibility of the IPTV system in providing the TVOD service and the TSTV service in the related art.

### Summary of the Invention

Based on above description, the present invention aims to provide a system and a method for implementing media interaction of the IPTV, so as to solve the problems of high construction cost, poor service quality, and poor system extensibility of the IPTV system in providing a great volume of the TVOD service and the TSTV service.

In order to achieve the above objects, according to one aspect of the present invention, a system for implementing media interaction of the IPTV is provided as set out in appended independent claim 1.

Further, when the edge stream media server fails, and the user terminal can not obtain timely services of the edgeedge stream media server in the P2P area of the terminal side in which the user terminal resides, the content delivery network manager is further adapted to designate a edge stream media server which is proximate to the failing edge stream media server, to respond the request of the user terminal and send the first data block of the target media file to the user terminal.

Further, the system further comprises one or more of the following means:
an electronic program guide, adapted to provide TVOD or TSTV programs for the user terminal to browse and play according to a request of the user terminal;
digital copyright management, adapted to encrypt and decrypt the segmented media data; and
service copyright management, adapted to provide account opening and authentication of TVOD service and TSTV service to the user terminal.

According to another aspect of the present invention, a method for implementing media interaction of the IPTV is provided, which can realize the pre-distribution storage of media data in advance.

The method for implementing media interaction of the IPTV according to the present invention is set out in appended independent claim 4.

Further, the steps of pre-distribution storage of media data in advance particularly comprises:
a center stream media server stores the segmented and encrypted media data; and
the center stream media server sends different data blocks of the segmented and encrypted media data to different edge stream media servers and stores them thereof according to a content release policy.

Further, the above step B comprises:
when the edge stream media server which is requested fails, a content delivery network manager designates a edge stream media server which is proximate to the failing edge stream media server, to respond the request of the user terminal and send the first block data of the target media file to the user terminal.

Further, the step of the edge stream media server downloads the subsequent data blocks of the target media file from the P2P area of the server side comprises:
the edge stream media server sends a query request to a content delivery network manager;
the content delivery network manager returns the information list of the content delivery network nodes capable of providing the target media file to the edge stream media server; and
the edge stream media server requests simultaneously a plurality of nodes to in the information list to download the subsequent data blocks of the target media file according to the information list, and sends the subsequent data blocks of the downloaded target media files to the user terminal in turn.

Further, the above step D comprises:
when all nodes in the information list can not provide data download service, the user terminal re-sends a query request to the content delivery network agent.

Further, the above step E comprises:
when a user performs jump forwarding operation, if the data block located at jump forwarding location has been downloaded, the user terminal plays the data block immediately; if the data block located at jump forwarding location has not been downloaded, the user terminal downloads the data block from the edge stream media server and plays the data block, at the same time, step C and step D are re-performed, then the user terminal plays downloaded subsequent data blocks located behind the jump forwarding position.

In virtue of the system and the method provided by the present invention, by implementing content delivery measure based on P2P in a metropolitan area network or a wide area network, and implementing P2P in an access network, and the edge stream media server being employed in two P2P areas to transport data, the service quality provided is improved, the pressure on the center stream media server and the edge stream media server is mitigated, and the construction cost of the system is reduced.

Other features and advantages of the present invention will be described in the following specification, and partly obvious from the description, or can be understood through implementing the present invention. The purposes and other advantages can be achieved and obtained through the structure specified by the specification, claims and drawings.

### Brief Description of the Drawings

Fig. 1 is a schematic diagram of the structure of a system for implementing media interaction of the IPTV according to an embodiment of the present invention.
Fig.2 is a schematic diagram of the relationship between data blocks which are used to be played initially by a user terminal in a system for implementing media interaction of the IPTV according to an embodiment of the present invention.
Fig.3 is a schematic diagram of the relationship between data blocks which are used to be played normally by a user terminal in a system for implementing media interaction of the IPTV according to an embodiment of the present invention.
Fig.4 is a flow chart of a method for implementing media interaction of the IPTV according to an embodiment of the present invention.

### Detailed Description of the Embodiments

### Functionality Overview

The object of the present invention is to overcome the shortcomings of the prior art, to solve the problems of high construction cost, poor service quality, and poor system extensibility occurring to the IPTV system in providing a great volume of the TVOD service and the TSTV service. The present invention sets forth implementing content delivery measure based on P2P in a metropolitan area network or a wide area network, implementing P2P in an access network, and employing the edge stream media server in two P2P areas to transfer data, so as to provide a high quality TSTV and TVOD service for a large number of users by using less construction cost, decrease the pressure of deploying servers, reduce the deployment cost, and improve the system extensibility.

The preferred embodiments of the present invention will be described in connection with the drawings which constitute a part of the application and are intend to illustrate the principle of the present invention together with the embodiments of the present invention. For the purpose of clarity and simplicity, the particular description of the well known function and structure of the elements in the specification will be omitted for avoiding unnecessarily obscuring the key matter of the present invention.

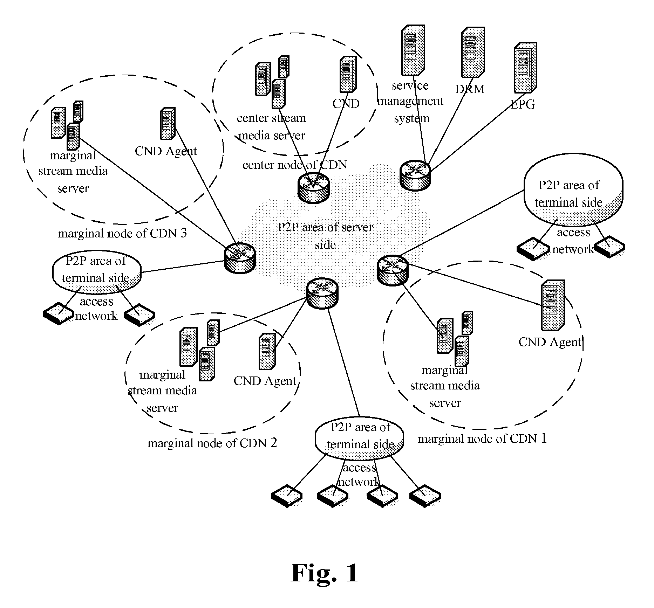

Firstly, a system for implementing media interaction of the IPTV according to an embodiment of the present invention will be described in detail in connection with Fig.1.

Fig.1 is a schematic diagram of the structure of the system for implementing media interaction of the IPTV according to the embodiment of the present invention. As shown in Fig.1, the system for implementing the TVOD service and the TSTV service of the IPTV by using P2P technology provided by the embodiment of the present invention comprises: a CDN Manager, CDN Agents, stream media servers and user terminals (for example, STBs, i.e., set-top boxes). In the system, the stream media servers comprise a center stream media server (including a sub-center stream media server) and edge stream media servers.

The CDN Manager and the center stream media server (including the sub-center media server) are connected to routers of the metropolitan area network/the wide area network. The edge stream media servers are connected to edge routers which connect the metropolitan area network/the wide area network and an access network, so as to form a P2P area of a server side which forms a content delivery network based on P2P. The CDN Agents and CDN nodes are in one-to-one correspondence, and are connected to the edge routers to which the edge stream media servers connect. The user terminals connect with the edge routers which connect the access network and the edge stream media servers, so as to form a P2P area of a terminal side.

Each part of the system for implementing media interaction of the IPTV of the embodiment of the present invention will be described in detail as follows.

The center stream media server is adapted to store segmented (i.e., being segmented into several data blocks) media data, wherein the operator can specify a audience rating to the stored media content, and the center stream media server can send different data blocks of the media data of the media content to different stream media servers and store them thereof according to a content release policy.

A plurality of edge stream media servers store the media data blocks sent by the center stream media server and realize the distributed storage of the media data blocks in the edge stream media servers according to parameters, such as audience rating, etc. of the media data blocks. Preferably, the data blocks with a high audience rating will be stored in more duplicates (so as to be convenient to provide data to terminals), while the data blocks with a low audience rating will be stored in less duplicates (so as to save storage space), this storage way can be referred to as pre-distribution storage (or content release) of the media data. Upon the completion of the pre-distribution storage, the system can begin to run.

The media data distribution in the edge stream media server may be classified into the following two cases.

Case 1: the user terminal stores the media data being broadcasted on-demand/time-shifted. Since the storage space of the user terminal is limited, the user terminal deletes the previously stored media data according to the first-in-first-out principle when the media data being broadcasted on-demand/time-shifted gradually increases.

Case 2: when the user terminal is powered on to perform IPTV service, the edge stream media server sends a control instruction to the user terminal to instruct it to store some media data. Upon obtaining a completed data block, the user terminal sends a state report message to the CDN Agent to report its storage state changes. The state report message may comprise the file name of the file to which the obtained data block belongs, data block number, IP address of the user terminal, and etc..

The CDN Manager is mainly adapted to perform statistics and management operation on media data distribution in the P2P area of the server side, respond a data query request from the node in the P2P area of the server side, and return a list of nodes which can provide the media data blocks, wherein a node in the list can be the center node (also referred to as the center stream media server), or the edge node (also referred to as the edge stream media server). The CDN Manager may send a content releasing instruction to a edge stream media server, thus sending the media data to the edge stream media actively. Alternatively, the CDN Manager and the center stream media server may be located in a same server physically, and in this case, they can be used as two function modules. In addition, two separate servers can be utilized to realize the roles of the CDN Manager and the center stream media server respectively.

The user terminal, which can be a STB with a built-in hard disk or a PC installed with corresponding software, obtains the media data blocks based on P2P way, and plays the obtained data blocks during the process of obtaining subsequent data blocks, so as to improve user's experience.

The CDN Agent is adapted to perform statistics and management operation on media data distribution in the P2P area of the terminal side, respond a data query request sent by the user terminal (for example, STB) in the P2P area of the terminal side, and return a list of nodes capable of providing service. The CDN Agent may send a content releasing instruction to the user terminal to actively deploy the media data to the user terminal. If there is no related media data to provide services in the P2P area of the terminal side, the CDN Agent will trigger the edge stream media server corresponding to it to request media data from the P2P area of the server side. Alternatively, the CDN Agent and the edge stream media server may be located in a same server physically, and in this case, they can be used as two function modules. In addition, two separate servers can be utilized to realize the roles of the CDN Agent and the edge stream media server respectively.

Preferably, the system for implementing media interaction of the IPTV according to the embodiment of the present invention may further comprise: a Service Management System (SMS) connected to a router of the metropolitan area network/the wide area network, a Digital Rights Management (DRM) system connected to a router of the metropolitan area network/the wide area network, an Electronic Programmer Guide (EPG) connected to a router of the metropolitan area network/the wide area network.

In the above, the EPG is an entrance of the IPTV service, which can organically organize and show the service provided by the IPTV A user can browse and optionally play a corresponding program only after entering into the EPG to which the user terminal belongs. The EPG provides functions such as searching and collecting, and etc., so as to provide a user with personalized user experience.

The SMS is mainly adapted to provide a operation supporting for the TSTV service and the TVOD service and comprises functions such as, content management, EPG management, DRM management, service management, CP/SP management, payment management, user management, authentication and authorization, charge management, statistics analysis, system management, value-added service management, and etc.. The operation supporting system supports the system to which it belongs to become an operable IPTV service system by managing users, services, and resources. The user terminal can utilize the TSTV and TVOD service of the IPTV only after opening an account and being authenticated by the operation supporting system.

The DRM system is a supporting system for realizing safe delivery of the content of the operator and may comprise three function realization parts respectively for media data encryption process, user authorization process and client end decryption process. A user can decrypt and watch a media program only after being authorized.

In order to facilitate the understanding of the system for implementing media interaction of the IPTV according to the embodiment of the present invention, the particular realization process of the system for implementing media interaction of the IPTV according to the embodiment of the present invention will be illustrated by way of example as following.

When the user terminal performs the IPTV service, the user terminal is required to visit the EPG firstly and browse the media content provided by the system.

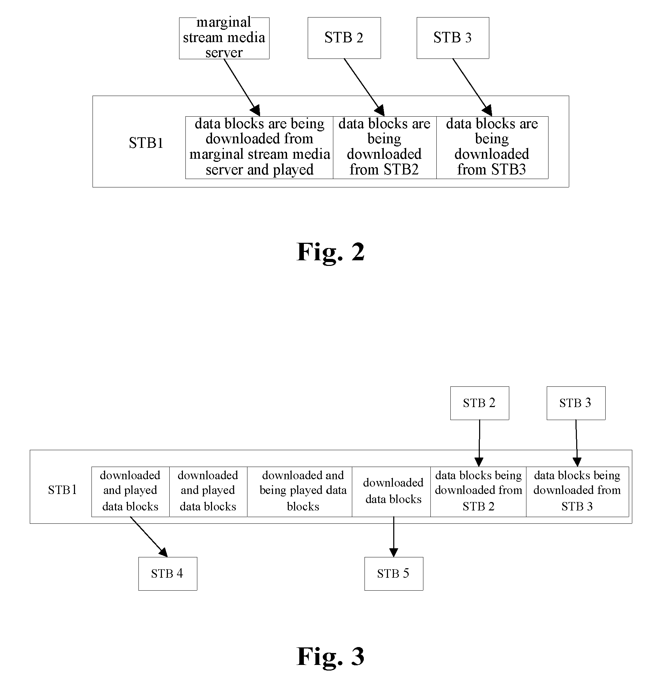

In the P2P area of the terminal side, because the user wants to experience the IPTV service when the user terminal is first turned on, pre-distribution storage can not be implemented in the P2P area of the terminal side. When the user selects one media content to watch, it is required to request the first data block of the media content from the edge stream media server firstly. In order to reduce time delay, in the case of the edge stream media server has not reach the upper limit of service capacity, it should respond the request of the user terminal and send the media data. The user terminal immediately plays the media data upon receiving it, at the same time, the user terminal may send a query request to the CDN Agent in the P2P area of the terminal side for the information of the nodes capable of providing the subsequent media data blocks. Fig.2 is a schematic diagram of the relationship between data blocks which are used to be played initially by the user terminal in the system for implementing media interaction of the IPTV according to an embodiment of the present invention. As shown in Fig.2, current user terminal (STB1) is downloading and playing data blocks from the edge stream media server, and downloading data blocks from STB2 and STB3 at the same time. Responding the query request from the user terminal, the CDN Agent may respond the information of the nodes capable of providing service, which may be other user terminals in the P2P area of the current terminal side, or the edge stream media servers in the P2P area of the current terminal side. The user terminal sends data requests to these nodes in sequence till it obtain service. If all of these nodes can not provide service, then the user terminal needs to make another query to the CDN Agent. Thus, with the play continues, the user terminal generally stores data blocks N+1, N+2,..., N+M into the hard disk while it is playing data block N, at the same time, it is receiving data blocks N+M+1, N+M+2,..., N+M+K of the media file. Fig.3 is a schematic diagram of the relationship between data blocks which are used to be played normally by the user terminal in the system for implementing media interaction of the IPTV according to an embodiment of the present invention. As shown in Fig.3, STB1 has acquired 4 data blocks, and is providing data blocks downloaded and played completely to STB4, and providing the fourth downloaded data block to STB5, and in addition, STB1 is downloading data blocks from STB2 and STB3.

By such segmenting media data into data blocks and acquiring the subsequent data blocks, downloading and playing of data blocks can be carried out at same time, so as to provide efficient service and excellent experience to users. When a user needs to perform jump forwarding, if the media data corresponding to the jump forwarding destination location has been stored in the hard disk of the user terminal, the media data of the jump forwarding destination location can be successfully played; at the same time, the user can perform X X fast forwarding operation on the media data stored in the hard disk of the user terminal. However, when the media data corresponding to the jump forwarding destination location is not in the hard disk of the user terminal, the user terminal must initiate a request for the corresponding media data to the CDN Agent immediately to obtain and play the media data, the process of which is the same with that of above mentioned play process.

When the media data of the TVOD service/the TSTV service required by the user terminal is not stored in the P2P area of the terminal side, the CDN Agent will notify the edge stream server to download the media data from the P2P area of the server side after receiving the query request of the media data from the user terminal. The edge stream media server firstly queries the list of nodes capable of providing the media data to the CDN Manager. The CDN Manager will return the list to the edge stream media server, which may comprise a plurality of nodes providing the media data (the center stream media server is included in these nodes capable of providing the media data at least). The edge stream media server will select one node from the list and request the media data from it. Preferably, the edge stream media server may request a plurality of different data blocks from a plurality of nodes at the same time. Because the data transfer between the servers is carried out based on a metropolitan area network, the rate of obtaining data by the edge stream media server is much greater than the required rate of playing the media data by the user terminal, which can meet the demand on the media data by the user terminal. The edge stream media server sends a state report message to the CDN Manager and the CDN Agent after acquiring a completed data block to report changes of its storage state. The state report message comprises the file name of the file to which the acquired data block belongs, data block number, IP address of the present edge stream media server, and etc..

Each user terminal shall report to the CDN Agent the data information provided to the external during the present operation period regularly, so that the statistics of contribution of the user terminal can be performed, so as to facilitate the resource share among the user terminals.

When the edge stream media server fails, the user terminal will send a request to the CDN Manager when it can not obtain a timely service from the edge stream media server in the P2P area of the terminal side. The CDN Manager will designate a edge stream media server which is proximate to the failing edge stream media serve to provide service to the user terminal, equalizing all the user terminals belong to the failing edge stream media server are merged into another edge stream media server, and the P2P area of which is extended.

A method for implementing media interaction of the IPTV according to an embodiment of the present invention will be described in connection with drawings as follows.

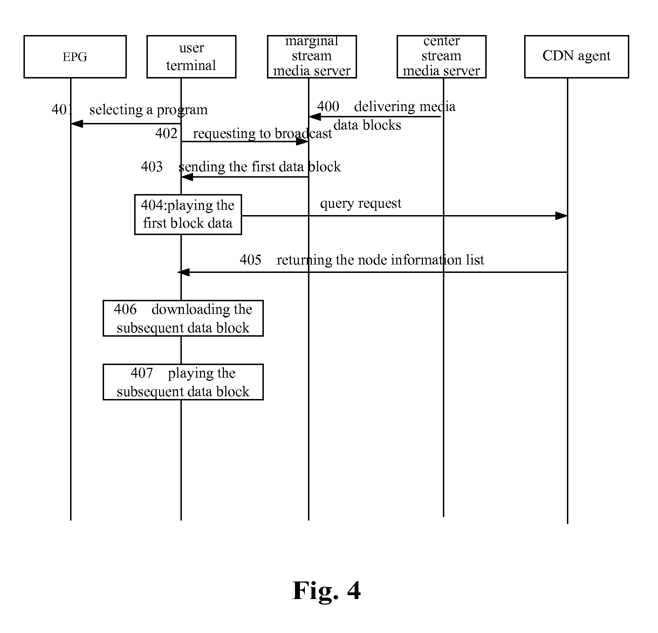

Fig.4 is a flow chart of the method for implementing the TVOD service and the TSTV service by using the system for implementing media interaction of the IPTV according to the above embodiment of the present invention. As shown in Fig.4, the particular process of the method comprises the following steps.

Step 400, the media data is pre-distributed and stored in advance, i.e., the media data which is divided into data blocks (i.e., to divide the media data into several data blocks) and encrypted by the digital rights management server is stored in the center stream media server, and an audience rating of the media data is designated by the operator. The center stream media server sends different data blocks of the media data to different edge stream media servers and stores them thereof according to a content release policy. The media data blocks are stored in the edge stream media servers in distribution way according to the audience rating. Preferably, the data blocks with high audience rating will be stored in a plurality of duplicates, while those with low audience rating will be stored in less duplicates.

Step 401, the user terminal browses the EPG and selects a TVOD program (or TSTV channel) to watch.

Step 402, the user terminal sends a request for a TVOD (or a TSTV) media file to a edge stream media server in a edge P2P area to which the user terminal belongs.

Step 403, the edge stream media server immediately responds the request for a TVOD (or TSTV) media file from the user terminal after receiving the request, and sends the first data block of the target media file. After receiving the first data block of the target media file, the user terminal immediately plays the media file and performs Step 404 at the same time.

Step 404, the user terminal sends a query request to the CDN Agent in the P2P area of the terminal side to which the user terminal belongs.

Step 405, the CDN Agent returns the information list of the CDN nodes capable of providing the subsequent data blocks to the user terminal, wherein nodes in the information list of the CDN nodes comprise other user terminals in the P2P area of the terminal side to which the user terminal belongs, and the CDN nodes further comprise the edge stream media servers in the P2P area of the terminal side to which the user terminal belongs, which is listed in the last of the node information list.

Step 406, the user terminal sends data downloading requests to the nodes in the node information list in sequence, till obtains data downloading service. The user terminal sends a state report message to the CDN Agent after downloading a new data block.

If all nodes in the node information list can not provide data download service, the user terminal re-sends a query request to the CDN Agent.

Step 407, the user terminal plays the downloaded data blocks in sequence.

In above step 405, when the CDN Agent can not find a node capable of providing the subsequent media data blocks of the target media file in the P2P area of the present terminal side, it notifies the edge media server to download the target media file from the P2P area of the server side. In particular, the process of the edge media server downloading the target media file from the P2P area of the server side is as follows:
the edge stream media server sends a query request to the CDN Manager;
the CDN Manager returns the information list of the nodes capable of providing the target media file to the edge stream media server, wherein the nodes in the node information list comprise at least the center stream media server which is listed in last of the node information list, and the nodes in the node information list comprise at least other edge stream media servers in the P2P area of the server side;
the edge stream media server simultaneously requests a plurality of nodes in the node information list, and downloads the subsequent data blocks of the target media file, and sends the downloaded subsequent data blocks to the user terminals in sequence, wherein, the edge stream media server sends the state report message to the CDN Manager and the CDN Agent respectively after downloading new data blocks.

In the above step 405, when the user performs jump forwarding operation, if the data block at jump forwarding destination location has been downloaded, it will be played immediately; if the data block at jump forwarding destination location has not been downloaded, the user terminal downloads it from the edge stream media server and plays it, at the same time, steps 404-406 are re-executed, then the user terminal plays the downloaded data blocks subsequent to the jump forwarding destination location in sequence.

Based on the above description, the embodiments of the present invention provide the system and the method for implementing media interaction of the IPTV, wherein, by implementing content delivery measure based on P2P in the metropolitan area network or the wide area network, it is realized to reduce the pressure on the center stream media server, by implementing P2P in the access network, it is realized to reduce the pressure on the edge stream media servers, at the same time, by making the edge stream media server undertake data transfer in the two P2P areas, it is realized to alleviate the requirement on the facilities for media delivery. In addition, the present invention also provides high quality TSTV and TVOD services of the IPTV for a large number of users by using a less construction cost. Moreover, the system of the present invention can be deployed across the metropolitan area network or the wide area network. Meanwhile, the system has an excellent extensibility, wherein the more users, the less pressure for the deployed servers. Therefore, the present invention solves the problems in the related art of poor service quality, high system construction cost, and poor system extensibility occurring to the IPTV system in providing the TVOD and TSTV service.

Obviously, those skilled in the art shall understand that individual modules and steps of the present invention can be implemented with general computation devices integrated together or released in the network formed by a plurality of computation devices, alternatively implemented with program codes executable by computation devices, which can be stored in memory devices for execution by the computation devices, or make into individual integrate circuit (IC), or make several modules or steps into a single IC. Thus, the present invention is not limited to any particular combination of hardware and software.

Above description is to illustrate the preferred embodiments of the present invention not to limit the present invention. Various alterations and changes to the present invention which are apparent to those skilled in the art should be included in the scope of the present invention. Thus, the scope of the present invention should be what is claimed in the claims.

## Claims

1. A system for implementing media interaction of IPTV, comprising: a content delivery network manager, a content delivery network agent, a center stream media server, a edge stream media server, and a user terminal, wherein, the content delivery network manger and the center stream media server are connected to a router of a metropolitan/wide area network, the edge stream media server is connected to a edge router through which the metropolitan/wide area network connects with an access network to form a peer-to-peer area (P2P area) of a server side, wherein, peers of the P2P area of the server side comprise the center stream media server and the edge stream media server; the content delivery network agent is connected to the edge router to which the edge stream media server connects, the user terminal connects to the edge router to which the edge stream media server connects via the access network to form a P2P area of a terminal side, wherein, peers of the P2P area of the terminal side comprise the edge stream media server and the user terminal; wherein
the user terminal is adapted to send a request for a TV On Demand (TVOD) media file or a Time Shift TV (TSTV) media file to a edge stream media server of the edge P2P area in which it is located, and play the first data block of a target media file immediately when receiving the first data block of the target media file; at the same time, the user terminal is further adapted to request, from the content delivery network agent in the P2P area of the terminal side in which it resides, an information list of content delivery network nodes capable of providing subsequent data blocks of the target media file , and sequentially request nodes in the information list to download the subsequent data blocks of the target media file according to the received information list, then play downloaded data blocks sequentially;
the center stream media server which comprises a sub-center stream media server is adapted to store segmented media data, and send different data blocks of the segmented media data to different edge stream media servers and store them thereof according to a content release policy;
the edge stream media server is adapted to store the data blocks sent by the center stream media server; when receiving the request for a TVOD media file or a TSTV media file sent by the user terminal, the edge stream media server is adapted to send the first data block of the target media file to the user terminal according to the request; and
the content delivery network agent is adapted to perform statistics and management operation on media data distribution in the P2P area of the terminal side, and return to the user terminal the information list of the content delivery network nodes capable of providing the subsequent data blocks according to the request of the user terminal, wherein, the information list comprises the edge stream media server and/or a user terminal capable of providing the subsequent data blocks;
wherein, when the content delivery network agent can not find the content delivery network nodes capable of providing the subsequent data blocks of the target media file in the P2P area of the terminal side in which it resides,
the content delivery network agent is further adapted to notify the edge stream media server to download the subsequent data blocks of the target media file in the P2P area of the server side;
the edge stream media server is further adapted to request to download the subsequent data blocks of the target media file from the content delivery network manager in the P2P area of the server side according to a notification of the content delivery network agent; and
the content delivery network manager is adapted to perform statistics and management operation on media data distribution in the P2P area of the server side, and return to the edge stream media server the information list of the content delivery network nodes capable of providing the subsequent data blocks of the target media file according to a request of the edge stream media server, wherein, the information list comprises the center stream media server, and the edge stream media server capable of providing the subsequent data blocks.

2. The system according to Claim 1, **characterized in that** when the edge stream media server fails, and the user terminal can not obtain timely services of the edge stream media server in the P2P area of the terminal side in which the user terminal resides,
the content delivery network manager is further adapted to designate a edge stream media server which is proximate to the failing edge stream media server, to respond the request of the user terminal and send the first data block of the target media file to the user terminal.

3. The system according to Claim 1 or 2, **characterized in that** the system further comprises one or more of the following means:
an electronic program guide, adapted to provide TVOD or TSTV programs for the user terminal to browse and play according to a request of the user terminal;
digital rights management, adapted to encrypt and decrypt the segmented media data; and
service copyright management, adapted to provide account opening and authentication of TVOD service and TSTV service to the user terminal.

4. A method for implementing media interaction of the IPTV, being adapted to realize the pre-distribution storage of media data in advance, the method comprising:
step A: a user terminal sending a request for a TV On Demand (TVOD) media file or a Time Shift TV (TSTV) media file to a edge stream media server in a edge P2P area in which it resides;
step B: the edge stream media server which is requested sending the first data block of a target media file to the user terminal according to the request of the user terminal;
step C: the user terminal playing the first data block of the target media file immediately after receiving the first data block of the target media file, at the same time, requesting a content delivery network agent in a P2P area of a terminal side in which the user terminal resides for an information list of content delivery network nodes capable of providing subsequent data blocks of the target media file, wherein, peers of the P2P area of the terminal side comprise the edge stream media server and the user terminal, the information list comprises the edge stream media server and/or a user terminal capable of providing the subsequent data blocks;
step D: the content delivery network agent returning the information list of content delivery network nodes capable of providing the subsequent data blocks to the user terminal according to a request of the user terminal; and
step E: the user terminal sequentially requesting nodes in the information list to download the subsequent data blocks of the target media file and playing downloaded data blocks sequentially;
wherein, the step D comprises: when the content delivery network agent can not find the content delivery network nodes capable of providing the subsequent data blocks of the target file in the P2P area of the terminal side in which it resides, it notifies the edge stream media server to download the subsequent data blocks of the target media file from a P2P area of a server side ,wherein, peers of the P2P area of the server side comprise a center stream media server and the edge stream media server; the edge stream media server downloads the subsequent data blocks of the target media file from the P2P area of the server side;
wherein, the step of the edge stream media server downloads the subsequent data blocks of the target media file from the P2P area of the server side comprises:
the edge stream media server sends a query request to a content delivery network manager;
the content delivery network manager returns the information list of the content delivery network nodes capable of providing the target media file to the edge stream media server, wherein, the information list comprises the center stream media server, and the edge stream media server capable of providing the subsequent data blocks; and
the edge stream media server requests simultaneously a plurality of nodes in the information list to download the subsequent data blocks of the target media file according to the information list, and sends the subsequent data blocks of the downloaded target media files to the user terminal in turn.

5. The method according to Claim 4, **characterized in that** the process of pre-distribution storage of media data in advance particularly comprises:
the center stream media server stores the segmented and encrypted media data; and
the center stream media server sends different data blocks of the segmented and encrypted media data to different edge stream media servers and stores them thereof according to a content release policy.

6. The method according to Claim 4 or 5, **characterized in that** the step B comprises:
when the edge stream media server which is requested fails, a content delivery network manager designates a edge stream media server which is proximate to the failing edge stream media server, to respond the request of the user terminal and send the first data block of the target media file to the user terminal.

7. The method according to Claim 4 or 5, **characterized in that** the step D comprises:
when all nodes in the information list can not provide data download service, the user terminal re-sends a query request to the content delivery network agent.

8. The method according to Claim 4 or 5, **characterized in that** the step E comprises:
when a user performs jump forwarding operation, if the data block located at jump forwarding location has been downloaded, the user terminal plays the data block immediately; if the data block located at jump forwarding location has not been downloaded, the user terminal downloads the data block from the edge stream media server and plays the data block, at the same time, step C and step D are re-performed, then the user terminal sequentially plays downloaded subsequent data blocks located behind the jump forwarding position.

## Patentansprüche

1. System für die Implementierung von Medieninteraktion eines IPTV, umfassend:
einen Content-Delivery-Network-Manager, einen Content-Delivery-Network-Vermittler, einen Zentral-Stream-Medien-Server, einen Rand-Stream-Medien-Server und ein Nutzer-Endgerät, wobei der Content-Delivery-Network-Manager und der Zentral-Stream-Medien-Server mit einem Router eines Metropolitan-/Wide-Area-Netzwerks verbunden sind, wobei der Rand-Stream-Medien-Server mit einem Rand-Router verbunden ist, durch den sich das Metropolitan-/Wide-Area-Netzwerk mit einem Access-Netzwerk verbindet, um einen serverseitigen Peer-to-Peer-Bereich (P2P-Bereich) zu bilden, wobei die Peers des serverseitigen P2P-Bereichs den Zentral-Stream-Medien-Server und den Rand-Stream-Medien-Server umfassen; wobei der Content-Delivery-Network-Vermittler mit dem Rand-Router verbunden ist, mit dem sich der Rand-Stream-Medien-Server verbindet, wobei der sich das Nutzerendgerät mit dem Rand-Router verbindet, mit dem sich der Rand-Stream-Medien-Server durch das Access-Netzwerk verbindet, um einen endgerätseitigen P2P-Bereich zu bilden, wobei die Peers des endgerätseitigen P2P-Bereichs den Rand-Stream-Medien-Server und das Nutzerendgerät umfassen; wobei
das Nutzerendgerät ausgebildet ist, eine Anfrage für eine TV-On-Demand (TVOD)-Mediendatei oder eine Time-Shift-TV (TSTV)-Mediendatei an einen Rand-Stream-Medien-Server des Rand-P2P-Bereichs, in dem er angeordnet ist, zu senden, und den ersten Datenblock einer Zielmediendatei unmittelbar wiederzugeben, wenn er den ersten Datenblock der Zielmediendatei empfängt; wobei gleichzeitig das Nutzerendgerät weiter ausgebildet ist, vom Content-Delivery-Network-Vermittler in dem endgerätseitigen P2P-Bereich, in dem er sich befindet, eine Informationsliste von Content-DeliveryNetwork-Knoten anzufragen, die geeignet sind, nachfolgende Datenblöcke der Zielmediendatei bereitzustellen, und sequentiell Knoten in der Informationsliste abzufragen, um die nachfolgenden Datenblöcke der Zielmediendatei gemäß der empfangenen Informationsliste herunterzuladen und dann die heruntergeladenen Datenblöcke sequentiell wiederzugeben;
der Zentral-Stream-Medien-Server, der einen Sub-Zentral-Stream-Medien-Server umfasst, ausgebildet ist, segmentierte Mediendaten zu speichern, und verschiedene Datenblöcke der segmentierten Mediendaten an verschiedene Rand-Stream-Medien-Server zu senden und diese davon gemäß einer Content-Freigabe-Richtlinie zu speichern;
der Rand-Stream-Medien-Server ausgebildet ist, die Datenblöcke, die durch den Zentral-Stream-Medien-Server gesendet werden, zu speichern; wobei, wenn der Rand-Stream-Medien-Server eine Anfrage für eine TVOD-Mediendatei oder eine TSTV-Mediendatei, die durch das Nutzerendgerät gesendet wurde, empfängt, der Rand-Stream-Medien-Server ausgebildet ist, den ersten Datenblock der Zielmediendatei an das Nutzerendgerät entsprechend der Anfrage zu senden; und
der Content-Delivery-Network-Vermittler ausgebildet ist, um Statistiken und Management-Operationen einer Mediendatenverteilung in dem endgerätseitigen P2P-Bereich auszuführen, und die Informationsliste der Content-Delivery-Network-Knoten, die geeignet sind, die nachfolgenden Datenblöcke gemäß der Anfrage des Nutzerendgeräts bereitzustellen, an das Nutzerendgerät zurückzusenden; wobei die Informationsliste den Rand-Stream-Medien-Server und/oder ein Nutzerendgerät, das geeignet ist, die nachfolgenden Datenblöcke bereitzustellen, umfasst;
wobei, wenn der Content-Delivery-Network-Vermittler die Content-Delivery-Network-Knoten, die geeignet sind, die nachfolgenden Datenblöcke der Zielmediendatei bereitzustellen in dem endgerätseitigen P2P-Bereich, in dem er sich befindet, nicht finden kann, der Content-Delivery-Network-Vermittler weiter ausgebildet ist, den Rand-Stream-Medien-Server zu benachrichtigen, die nachfolgenden Datenblöcke der Zielmediendatei in dem serverseitigen P2P-Bereich herunterzuladen;
der Rand-Stream-Medien-Server weiter ausgebildet ist, einen Download der nachfolgenden Datenblöcke der Zielmediendatei von dem Content-Delivery-Network-Manager in dem serverseitigen P2P-Bereich gemäß einer Benachrichtigung des Content-Delivery-Network-Vermittlers anzufragen; und
der Content-Delivery-Network-Manager ausgebildet ist, um Statistiken und Management-Operation auf die Mediendatenverteilung in dem serverseitigen P2P-Bereich auszuführen, und die Informationsliste von den Content-Delivery-Network-Knoten, die geeignet sind, die nachfolgenden Datenblöcke der Zielmediendatei gemäß einer Anfrage des Rand-Stream-Medien-Servers bereitzustellen, an den Rand-Stream-Medien-Server zurückzusenden, wobei die Informationsliste den Zentral-Stream-Medien-Server und den Rand-Stream-Medien-Server, der geeignet ist, die nachfolgenden Datenblöcke bereitzustellen, umfasst.

2. System nach Anspruch 1, **dadurch gekennzeichnet, dass**, wenn der Rand-Stream-Medien-Server ausfällt und das Nutzerendgerät nicht rechtzeitig Dienste des Rand-Stream-Medien-Servers in dem endgerätseitigen P2P-Bereich, in dem sich das Nutzerendgerät befindet, beziehen kann,
der Content-Delivery-Network-Manager weiter ausgebildet ist, einen Rand-Stream-Medien-Server zu bestimmen, der sich in der Nähe des ausfallenden Rand-Stream-Medien-Servers befindet, um die Anfrage des Nutzerendgerätes zu beantworten und den ersten Datenblock der Zielmediendatei an das Nutzerendgerät zu senden.

3. System nach Anspruch 1 oder 2, **dadurch gekennzeichnet, dass** das System weiter eines oder mehrere der folgenden Mittel umfasst:
einen elektronischen Programmführer, der ausgebildet ist, TVOD- oder TSTV-Programme für das Nutzerendgerät bereitzustellen, um diese gemäß einer Anfrage des Nutzerendgerätes zu durchsuchen und wiederzugeben;
Digital-Rights-Management, das ausgebildet ist, die segmentierten Mediendaten zu verschlüsseln und entschlüsseln; und
Dienst-Urheberrechtsverwaltung, die ausgebildet ist, Kontoeröffnung und Authentifizierung eines TVOD-Dienstes und TSTV-Dienstes an das Nutzerendgerät bereitzustellen.

4. Verfahren zur Implementierung von Medieninteraktion des IPTV, welches ausgebildet ist, die Vorverteilungsspeicherung von Mediendaten im Voraus durchzuführen, wobei das Verfahren umfasst:
Schritt A: Senden, durch ein Nutzerendgerät, einer Anfrage für eine TV-On-Demand (TVOD)-Mediendatei oder eine Time-Shift-TV (TSTV)-Mediendatei an einen Rand-Stream-Medien-Server in einem Rand-P2P-Bereich, in dem es sich befindet;
Schritt B: Senden, durch den angefragten Rand-Stream-Medien-Server, des ersten Datenblocks einer Zielmediendatei an das Nuterzendgerät entsprechend der Anfrage des Nutzerendgerätes;
Schritt C: Wiedergeben, durch das Nutzerendgerät, des ersten Datenblocks der Zielmediendatei unmittelbar, nachdem es den ersten Datenblock der Zielmediendatei empfängt, und gleichzeitig Anfragen einer eine Informationsliste von Content-Delivery-Network-Netzwerk-Knoten, die geeignet sind, nachfolgende Datenblöcke der Zielmediendatei bereitzustellen, bei einem Content-Delivery-Network -Vermittler in einem endgerätseitigen P2P-Bereich, in dem sich das Nutzerendgerät befindet, wobei Peers des endgerätseitigen P2P-Bereichs den Rand-Stream-Medien-Server und das Nutzerendgerät umfassen, wobei die Informationsliste den Rand-Stream-Medien-Server und/oder ein Nutzerendgerät, welches geeignet ist, die nachfolgenden Datenblöcke bereitzustellen, umfasst;
Schritt D: Rücksenden, durch den Content-Delivery-Network-Vermittler, der Informationsliste von Content-Delivery-Network-Knoten, die geeignet sind, die nachfolgenden Datenblöcke an das Nutzerendgerät gemäß einer Anfrage des Nutzerendgeräts bereitzustellen; und
Schritt E: sequentielles Anfragen, durch das Nutzerendgerät, eines Downloads der nachfolgenden Datenblöcke der Zielmediendatei an die Knoten in der Informationsliste, und sequentielles Wiedergeben der heruntergeladenen Datenblöcke;
wobei Schritt D umfasst: wenn der Content-Delivery-Network-Vermittler die Content-Delivery-Network-Knoten, die geeignet sind, die nachfolgenden Datenblöcke der Zieldatei in dem endgerätseitigen P2P-Bereich, in dem das Endgerät sich befindet, nicht finden kann, den Rand-Stream-Medien-Server benachrichtigt, die nachfolgenden Datenblöcke der Zielmediendatei aus einem serverseitigen P2P-Bereich herunterzuladen, wobei Peers des serverseitigen P2P-Bereichs einen Zentral-Stream-Medien-Server und den Rand-Stream-Medien-Server umfassen; wobei der Rand-Stream-Medien-Server die nachfolgenden Datenblöcke der Zielmediendatei aus dem serverseitigen P2P-Bereich herunterlädt;
wobei der Schritt, in dem der Rand-Stream-Medien-Server die nachfolgenden Datenblöcke der Zielmediendatei von dem serverseitigen P2P-Bereich herunterlädt, umfasst:
der Rand-Stream-Medien-Server sendet eine Suchanfrage an einen Content-Delivery-Network-Manager;
der Content-Delivery-Network-Manager sendet die Informationsliste der Content-Delivery-Network-, die geeignet sind, die Zielmediendatei bereitzustellen, an den Rand-Stream-Medien-Server zurück, wobei die Informationsliste den Zentral-Stream-Medien-Server und den Rand-Stream-Medien-Server, der geeignet ist, die nachfolgenden Datenblöcke bereitzustellen, umfasst; und
der Rand-Stream-Medien-Server fragt eine Mehrzahl von Knoten in der Informationsliste an, die nachfolgenden Datenblöcke der Zielmediendatei gemäß der Informationsliste herunterzuladen, und sendet, in Antwort, die nachfolgenden Datenblöcke der heruntergeladenen Zielmediendateien an das Nutzerendgerät.

5. Verfahren nach Anspruch 4, **dadurch gekennzeichnet, dass** der Prozess der Vorverteilungslagerung der Mediendaten im Voraus insbesondere umfasst:
der Zentral-Stream-Medien-Server speichert die segmentierten und verschlüsselten Mediendaten; und
der Zentral-Stream-Medien-Server sendet verschiedene Datenblöcke der segmentierten und verschlüsselten Mediendaten an verschiedene Rand-Stream-Medien-Server und speichert diese davon gemäß einer Inhalts-Freigabe-Richtlinie.

6. Verfahren nach Anspruch 4 oder 5, **dadurch gekennzeichnet, dass** der Schritt B umfasst:
wenn der Rand-Stream-Medien-Server, der angefragt ist, ausfällt, bestimmt ein Content-Delivery-Network-Manager einen Rand-Stream-Medien-Server, der sich in der Nähe des ausfallenden Rand-Stream-Medien-Servers befindet, um die Anfrage des Nutzerendgeräts zu beantworten und den ersten Datenblock der Zielmediendatei an das Nutzerendgerät zu senden.

7. Verfahren nach Anspruch 4 oder 5, **dadurch gekennzeichnet, dass** der Schritt D umfasst:
wenn alle Knoten in der Informationsliste Daten-Downloaddienste nicht bereitstellen können, sendet das Nutzerendgerät erneut eine Suchanfrage an den Content-Delivery-Network-Vermittler.

8. Verfahren nach Anspruch 4 oder 5, **dadurch gekennzeichnet, dass** der Schritt E umfasst:
wenn ein Benutzer eine Jump-Forward-Handlung ausführt, gibt das Nutzerendgerät den Datenblock unmittelbar wieder, falls sich der Datenblock, der sich an dem Jump-Forward-Ort befindet, heruntergeladen wurde; wobei das Nutzerendgerät den Datenblock von dem Rand-Stream-Medien-Server herunterlädt und den Datenblock wiedergibt, falls der Datenblock, der sich an dem Jump-Forward-Ort befindet, nicht heruntergeladen wurde, wobei gleichzeitig Schritt C und Schritt D erneut ausgeführt werden, und dann das Nutzerendgerät sequentiell heruntergeladene nachfolgende Datenblöcke wiedergibt, die sich hinter der Jump-Forward-Position befinden.

## Revendications

1. Système pour mettre en oeuvre une interaction média d'IPTV, comprenant un gestionnaire de réseau de fourniture de contenu, un agent de réseau de fourniture de contenu, un serveur média de flux central, un serveur média de flux périphérique et un terminal utilisateur, dans lequel le gestionnaire de réseau de fourniture de contenu et le serveur média de flux central sont connectés à un routeur d'un réseau étendu/métropolitain, le serveur média de flux périphérique est connecté à un routeur périphérique à travers lequel le réseau étendu/métropolitain se connecte à un réseau d'accès pour former une zone pair à pair (zone P2P) d'un côté serveur, dans lequel des pairs de la zone P2P du côté serveur comprennent le serveur média de flux central et le serveur média de flux périphérique ; l'agent de réseau de fourniture de contenu est connecté au routeur périphérique auquel le serveur média de flux périphérique se connecte, le terminal utilisateur se connecte au routeur périphérique auquel le serveur média de flux périphérique se connecte par l'intermédiaire du réseau d'accès pour former une zone P2P d'un côté terminal ; dans lequel des pairs de la zone P2P du côté terminal comprennent le serveur média de flux périphérique et le terminal utilisateur ; dans lequel
le terminal utilisateur est adapté pour envoyer une demande pour un fichier média de télévision à la demande (TVOD) ou un fichier média de télévision en décalage temporel (TSTV) à un serveur média de flux périphérique de la zone P2P périphérique dans laquelle il est situé, et lire le premier bloc de données d'un fichier média cible immédiatement quand il reçoit le premier bloc de données du fichier média cible ; au même moment, le terminal utilisateur est adapté en outre pour demander, à l'agent de réseau de fourniture de contenu dans la zone P2P du côté terminal dans laquelle il réside, une liste d'informations de noeuds de réseau de fourniture de contenu capables de fournir des blocs de données subséquents du fichier média cible, et demander séquentiellement à des noeuds dans la liste d'informations de télécharger les blocs de données subséquents du fichier média cible en fonction de la liste d'informations reçue, puis lire séquentiellement des blocs de données téléchargés ;
le serveur média de flux central qui comprend un sous-serveur média de flux central est adapté pour stocker des données média segmentées et envoyer des blocs de données différents des données média segmentées aux différents serveurs média de flux périphériques et les stocker en fonction d'une politique de diffusion de contenu ;
le serveur média de flux périphérique est adapté pour stocker les blocs de données envoyés par le serveur média de flux central ; quand il reçoit la demande pour un fichier média de TVOD ou un fichier média de TSTV envoyée par le terminal utilisateur, le serveur média de flux périphérique est adapté pour envoyer le premier bloc de données du fichier média cible au terminal utilisateur en fonction de la demande ; et
l'agent de réseau de fourniture de contenu est adapté pour effectuer une opération de statistique et de gestion sur la distribution de données média dans la zone P2P du côté terminal et renvoyer au terminal utilisateur la liste d'informations des noeuds de réseau de fourniture de contenu capables de fournir les blocs de données subséquents en fonction de la demande du terminal utilisateur, dans lequel la liste d'informations comprend le serveur média de flux périphérique et/ou un terminal utilisateur capable de fournir les blocs de données subséquents ;
dans lequel, quand l'agent de réseau de fourniture de contenu ne peut pas trouver les noeuds de réseau de fourniture de contenu capables de fournir les blocs de données subséquents du fichier média cible dans la zone P2P du côté terminal dans laquelle il réside,
l'agent de réseau de fourniture de contenu est adapté en outre pour notifier au serveur média de flux périphérique de télécharger les blocs de données subséquents du fichier média cible dans la zone P2P du côté serveur ;
le serveur média de flux périphérique est adapté en outre pour demander de télécharger les blocs de données subséquents du fichier média cible à partir du gestionnaire de réseau de fourniture de contenu dans la zone P2P du côté serveur en fonction d'une notification de l'agent de réseau de fourniture de contenu ; et
le gestionnaire de réseau de fourniture de contenu est adapté pour effectuer une opération de statistique et de gestion sur la distribution de données média dans la zone P2P du côté serveur et renvoyer au serveur média de flux périphérique la liste d'informations des noeuds de réseau de fourniture de contenu capables de fournir les blocs de données subséquents du fichier média cible en fonction d'une demande du serveur média de flux périphérique, dans lequel la liste d'informations comprend le serveur média de flux central et le serveur média de flux périphérique capable de fournir les blocs de données subséquents.

2. Système selon la revendication 1, **caractérisé en ce que**, quand le serveur média de flux périphérique échoue, et le terminal utilisateur ne peut pas obtenir en temps utile des services du serveur média de flux périphérique dans la zone P2P du côté terminal dans laquelle le terminal utilisateur réside,
le gestionnaire de réseau de fourniture de contenu est adapté en outre pour désigner un serveur média de flux périphérique qui est proche du serveur média de flux périphérique défaillant, pour répondre à la demande du terminal utilisateur et envoyer le premier bloc de données du fichier média cible au terminal utilisateur.

3. Système selon la revendication 1 ou 2, **caractérisé en ce que** le système comprend en outre un ou plusieurs des moyens suivants :
un guide de programmes électronique adapté pour fournir des programmes TVOD ou TSTV pour le terminal utilisateur pour naviguer et lire en fonction d'une demande du terminal utilisateur ;
une gestion de droits numériques adaptée pour chiffrer et déchiffrer les données média segmentées ; et
une gestion de droits d'auteur de services adaptée pour fournir une ouverture et une authentification de compte de service de TVOD et de service de TSTV au terminal utilisateur.

4. Procédé pour mettre en oeuvre une interaction média de l'IPTV, qui est adapté pour réaliser à l'avance un stockage de pré-distribution de données média, le procédé comprenant :
une étape A où un terminal utilisateur envoie une demande pour un fichier média de télévision à la demande (TVOD) ou un fichier média de télévision en décalage temporel (TSTV) à un serveur média de flux périphérique de la zone P2P périphérique dans laquelle il réside ;
une étape B où le serveur média de flux périphérique qui est demandé envoie le premier bloc de données d'un fichier média cible au terminal utilisateur en fonction de la demande du terminal utilisateur ;
une étape C où le terminal utilisateur lit le premier bloc de données du fichier média cible immédiatement après la réception du premier bloc de données du fichier média cible, au même moment, demande à un agent de réseau de fourniture de contenu, dans une zone P2P d'un côté terminal dans laquelle le terminal utilisateur réside, une liste d'informations de noeuds de réseau de fourniture de contenu capables de fournir des blocs de données subséquents du fichier média cible, dans lequel, des pairs de la zone P2P du côté terminal comprennent le serveur média de flux périphérique et le terminal utilisateur, la liste d'informations comprend le serveur média de flux périphérique et/ou un terminal utilisateur capable de fournir les blocs de données subséquents ;
une étape D où l'agent de réseau de fourniture de contenu renvoie la liste d'informations des noeuds de réseau de fourniture de contenu capables de fournir les blocs de données subséquents au terminal utilisateur en fonction d'une demande du terminal utilisateur ; et
une étape E où le terminal utilisateur demande séquentiellement à des noeuds dans la liste d'informations de télécharger les blocs de données subséquents du fichier média cible et lit séquentiellement des blocs de données téléchargés ;
dans lequel, l'étape D comprend : quand l'agent de réseau de fourniture de contenu ne peut pas trouver les noeuds de réseau de fourniture de contenu capables de fournir les blocs de données subséquents du fichier cible dans la zone P2P du côté terminal dans laquelle il réside, le fait qu'il notifie au serveur média de flux périphérique de télécharger les blocs de données subséquents du fichier média cible dans la zone P2P d'un côté serveur, dans lequel des pairs de la zone P2P du côté serveur comprennent un serveur média de flux central et le serveur média de flux périphérique ; le fait que le serveur média de flux périphérique télécharge les blocs de données subséquents du fichier média cible à partir de la zone P2P du côté serveur ;
dans lequel l'étape où le serveur média de flux périphérique télécharge les blocs de données subséquents du fichier média cible à partir de la zone P2P du côté serveur comprend :
le fait que le serveur média de flux périphérique envoie une demande de requête à un gestionnaire de réseau de fourniture de contenu ;
le fait que le gestionnaire de réseau de fourniture de contenu renvoie la liste d'informations des noeuds de réseau de fourniture de contenu capables de fournir le fichier média cible au serveur média de flux périphérique, dans lequel la liste d'informations comprend le serveur média de flux central et le serveur média de flux périphérique capable de fournir les blocs de données subséquents ; et
le fait que le serveur média de flux périphérique demande simultanément à une pluralité de noeuds dans la liste d'informations de télécharger les blocs de données subséquents du fichier média cible en fonction de la liste d'informations et envoie à son tour les blocs de données subséquents des fichiers média cibles téléchargés au terminal utilisateur.

5. Procédé selon la revendication 4, **caractérisé en ce que** le processus de stockage de pré-distribution de données média à l'avance comprend en particulier :
le fait que le serveur média de flux central stocke les données média segmentées et chiffrées ; et
le fait que le serveur média de flux central envoie des blocs de données différents des données média segmentées et chiffrées à différents serveurs média de flux périphériques et les stocke en fonction d'une politique de diffusion de contenu.

6. Procédé selon la revendication 4 ou 5, **caractérisé en ce que** l'étape B comprend :
quand le serveur média de flux périphérique qui est demandé échoue, le fait qu'un gestionnaire de réseau de fourniture de contenu désigne un serveur média de flux périphérique qui est proche du serveur média de flux périphérique défaillant, pour répondre à la demande du terminal utilisateur et envoyer le premier bloc de données du fichier média cible au terminal utilisateur.

7. Procédé selon la revendication 4 ou 5, **caractérisé en ce que** l'étape D comprend :
quand tous les noeuds dans la liste d'informations ne peuvent pas fournir le service de téléchargement de données, le fait que le terminal utilisateur envoie à nouveau une demande de requête à l'agent de réseau de fourniture de contenu.

8. Procédé selon la revendication 4 ou 5, **caractérisé en ce que** l'étape E comprend :
quand un utilisateur effectue une opération de transmission par saut, si le bloc de données situé dans la position de transmission par saut a été téléchargé, le fait que le terminal utilisateur lise immédiatement le bloc de données ; si le bloc de données situé dans la position de transmission par saut n'a pas été téléchargé, le fait que le terminal utilisateur télécharge le bloc de données à partir du serveur média de flux périphérique et lise le bloc de données, au même moment, l'étape C et l'étape D sont exécutées à nouveau, puis le terminal utilisateur lit séquentiellement des blocs de données subséquents téléchargés, situés derrière la position de transmission par saut.
